# EUROPÄISCHE PATENTSCHRIFT

(11) **EP 3 098 626 B1**
(45) Veröffentlichungstag und Bekanntmachung des Hinweises auf die Patenterteilung: **19.05.2021**
(21) Anmeldenummer: 15169990.7
(22) Anmeldetag: 29.05.2015
(51) Int. Cl.: G01S 17/10, G01S 7/4865

(54) **ZEITMESSSCHALTUNG UND OPTOELEKTRONISCHER DISTANZMESSER MIT EINER EBENSOLCHEN ZEITMESSSCHALTUNG**
TIMER CIRCUIT AND OPTOELECTRONIC RANGE FINDER USING SUCH A TIMER CIRCUIT
DISPOSITIF DE CADENCEMENT ET DISPOSITIF DE MESURE DE DISTANCE OPTOÉLECTRONIQUE DOTÉ D'UN TEL DISPOSITIF DE CADENCEMENT

(43) Veröffentlichungstag der Anmeldung: 30.11.2016
(73) Patentinhaber: Hexagon Technology Center GmbH, 9435 Heerbrugg (CH)
(72) Erfinder: STUTZ, Reto, CH-9434 Au (CH); BESTLER, Simon, D-88085 Langenargen (DE); WOHLGENANNT, Rainer, A-6833 Klaus (AT); HINDERLING, Jürg, CH-9437 Marbach (CH)
(74) Vertreter: Kaminski Harmann

(56) Entgegenhaltungen:
- EP-A1- 1 876 469
- WO-A1-2008/009387
- WO-A1-2011/076907
- US-A1- 2015 116 695
- US-B1- 7 379 016

## Beschreibung

Die Erfindung betrifft eine Zeitmessschaltung und einen optoelektronischen Distanzmesser mit einer ebensolchen Zeitmessschaltung.

Im Bereich der optischen bzw. optoelektronischen Distanzmessung sind verschiedene Prinzipien und Verfahren zur Bestimmung der gesuchten Entfernungen bekannt. Ein Ansatz besteht darin, gepulste elektromagnetische Strahlung, wie z.B. Laserlicht, auf ein zu vermessendes Ziel auszusenden und nachfolgend ein Echo von diesem Ziel als rückstreuendem Objekt zu empfangen, wobei die Distanz zum zu vermessenden Ziel anhand der Laufzeit des Pulses bestimmt werden kann. Solche Pulslaufzeitmesser (ToF, also Time-of-Flight) haben sich mittlerweile in vielen Bereichen als Standardlösungen durchgesetzt.

Zur Detektion des Retour kommenden Pulses können zwei unterschiedliche Ansätze verwendet.

Bei der so genannten Schwellwertmethode wird ein Lichtpuls detektiert, wann die Intensität der auf einen Detektor des eingesetzten Distanzmessgeräts einfallenden Strahlung einen gewissen Schwellwert überschreitet, wobei dies meist mithilfe einer Komparator-Stufe (also eines Komparators) realisiert wird. Durch diesen Schwellwert wird verhindert, dass Rauschen und Störsignale aus dem Hintergrund fälschlich als Nutzsignal, d.h. als rückgestreutes Licht des emittierten Pulses, detektiert werden.

Ein Nachteil der Schwellwertmethode besteht z.B. darin, dass bei schwachen rückgestreuten Pulsen, wie sie beispielsweise durch grössere Messdistanzen bedingt werden, eine Detektion nicht mehr möglich ist, wenn die Pulsintensität unter die Detektionsschwelle, d.h. unter den Schwellwert, fällt.

Ein weiterer Nachteil ist der entweder komplexe Aufbau und/oder die mangelnde Präzision bzgl. der Zeitbestimmung des Komparator-Signals (also zu geringe Auflösung) von vielen bekannten und im Rahmen der Schwellwertmethode bisher üblicherweise zum Einsatz kommenden Zeit/Digital-Wandlern TDCs (Time-to-Digital-Converter).

Der andere Ansatz basiert auf der Abtastung bzw. dem Sampling des rückgestreuten Pulses (WFD-Methode, Wave-Form-Digitizing). Ein zurückkommendes Signal wird dabei also detektiert, die von einem Detektor erfasste Strahlung abgetastet, der Puls innerhalb des abgetasteten Bereichs identifiziert und schliesslich dessen Lage zeitlich hochgenau bestimmt. Durch die Verwendung einer ausreichenden Zahl von Abtastwerten und/oder zur Emissionsrate oder zur Kodierungsfolge des Sendesignals synchronem Aufsummieren des Empfangssignals kann ein Nutzsignal auch unter ungünstigen Umständen identifiziert werden, so dass auch grössere Distanzen oder verrauschte bzw. mit Störungen behaftete Hintergrundszenarien bewältigt werden können. Die digitale Phasenmessung ist eine Untervariante dieser Messmethode.

Problematisch ist auch bei dieser so genannten Pulsform-Digitalisierungs-Methode (WFD-Methode) limitierte lineare Aussteuerbereich der elektronischen Empfängerschaltung. Im Nahbereich kann das Signal den Empfänger sättigen, so dass die Form des Sendesignals nicht mehr richtig ermittelt und die Laufzeit ungenügend genau bestimmt wird.

In der WO 2008/009387 ist dabei nun für Pulslaufzeitmessungen (ToF, Time-of-Flight) beschrieben, dass alternativ - d.h. je nach dem welcher Signaldynamikbereich des Empfängers durch das zurückkommende Signal angesprochen wird - entweder die Schwellwertmethode (bei starkem zurückkommendem Signal) oder die abtastende Pulsform-Digitalisierungs-Methode WFD (bei schwächerem zurückkommendem Signal) verwendet werden kann.

Als Nachteil dieser Kombination von unterschiedlichen Methoden (je nach dem, welcher Signaldynamikbereich angesprochen wird) stellt sich die ungenügende Vergleichbarkeit von methodenübergreifend bestimmten Distanzwerten sowie der konstruktive und/oder rechnerische Zusatzaufwand dar, um für einen Distanzmesser effektiv zwei komplett separate und unterschiedliche Schaltungen (bzw. zumindest Kanäle) vorzusehen und um - was die Kalibrierung und letztliche Berechnung des gesuchten Distanzwertes betrifft - nach zwei komplett unterschiedlichen Methoden vorgehen zu müssen

US 2015/116695 A1 beschreibt Lichtpuls basierte Zeitmessung.

Aufgabe ist es somit einerseits eine verbesserte und/oder im Aufbau weniger komplexe Zeitmessschaltung (TDC) bereitzustellen, die vorteilhaft im Rahmen der Schwellwertmethode (insbesondere im Bereich der optoelektronischen Entfernungsmessung) zum Einsatz gelangen kann. Im Speziellen soll dabei auch eine Erhöhung der Zeitmessgenauigkeit erzielt werden können. Andererseits ist es eine Aufgabe speziell für Distanzmesser, bei welchen abhängig vom Signaldynamikbereich des zurückkommenden Pulses entweder das Anwenden der Schwellwertmethode oder der WFD-Methode vorgesehen ist, die Komplexität des Aufbaus der dafür erforderlichen Schaltungen zu verringern und/oder die methodenübergreifende Vergleichbarkeit der Messwerte zu erhöhen und/oder den Kalibrier-/Rechenaufwand für die jeweiligen unterschiedlichen Methoden zu verringern. Insbesondere soll dabei auch ermöglicht werden, über einen erweiterten Dynamikbereich hinweg eine hohe Distanzmessgenauigkeit bereitzustellen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft - gemäss eines ersten Aspekts - eine Zeitmessschaltung für ein eingehendes analoges Signal, insbesondere zur Anwendung als Teil einer Empfangsschaltung eines Entfernungsmessers und dabei zur Messung eines Zeitpunkts für einen Retour kommenden Lichtpuls. Die Zeitmessschaltung weist dabei auf
- eine (insbesondere analoge) Komparator-Stufe zur Erzeugung eines Komparator-Ausgangssignals anhängig von einer Erfüllung eines Kriteriums durch das eingehende analoge Signal, insbesondere wobei als das Kriterium ein Über- oder Unterschreiten eines Schwellwerts definiert ist,
- eine Digitalisier-Stufe (ADC, Analog-to-Digital-Converter) zur mit einer definierten Abtastrate erfolgenden Abtastung eines der Digitalisier-Stufe zugeführten Eingangssignals und Wandlung in abgetastete Werte für das Eingangssignal enthaltende digitale Daten und
- einer Auswerteeinheit zur Bestimmung einer zeitlichen Lage für das eingehende analoge Signal durch Auswertung der digitalen Daten.

Erfindungsgemäss ist nun zwischen der Komparator-Stufe und der Digitalisier-Stufe eine Signalerzeugungs-Stufe zwischengeschaltet, welche dafür ausgelegt ist, um zeitlich fix abhängig vom Erhalt des Komparator-Ausgangssignals ein auf post-Abtastungs-Interpolierbarkeit ausgelegtes Form-Signal bekannter Form und insbesondere bekannter Amplitude zu generieren und auszugeben.

Die Auswerteeinheit bestimmt dann die gesuchte, zu messende Zeit für das eingehende analoge Signal unter Heranziehung von einer zeitlichen Interpolation der in den digitalen Daten enthaltenen Werte sowie der bekannten Form des Form-Signals.

Methoden zur präzisen Zeitinterpolation (für sich genommen) sind beispielsweise in der Druckschrift WO 2011/076907 beschrieben.

Dieser erste Aspekt der Erfindung liegt mit anderen Worten also darin, noch auf Analogsignal-Ebene, also noch vor dem Schritt des unvermeidbar mit Informationsgehaltverlust behafteten Digitalisierens, direkt zeitlich fix abhängig von der Ausgabe des Komparatorsignals ein - nach wie vor bzw. nochmals analoges - Form-Signal (mit einer Signalerzeugungs-Stufe) zu generieren, das die bekannte Form aufweist und von seiner Form und ggf. Amplitude her speziell dafür ausgelegt ist, um die nach dem Abtasten und Digitalisieren erhaltenen Werte verbessert und weniger unbestimmt zu interpolieren bzw. mit möglichst geringer Unsicherheit die Form des Form-Signals in die beim Abtasten erhaltenen diskreten Werte einzupassen. Versuche habe gezeigt, dass erfindungsgemäss dadurch die zeitliche Lage für das Formsignal auf Pikosekunden genau (ggf. sogar subpikosekundengenau) bestimmbar ist.

Das typischerweise ausgegebene Komparatorsignal weist in der Regel eine extrem steile Flanke auf und kann faktisch nur zwei Werte annehmen (vergleichbar mit 0 und 1).

Beim Zeitbestimmen, wann nun das Komparatorausgangssignal von 0 auf 1 wechselt, liegt im Stand der Technik beim Betrachten dieses Komparatorausgangssignals mit einer bestimmten Betrachtungsrate (also insb. Abtastrate) die Unbestimmtheit vor, wann innerhalb eines Taktes dieser Rate genau der Wechsel von 0 auf 1 denn nun stattfand.

Erfindungsgemäss wird jedoch gar nicht das Komparatorausgangssignal selbst betrachtet, sondern dieses genutzt, um noch analog (also ohne Hinzufügung von Abtastratenunsicherheiten) ein Form-Signal optimierter Form zu erzeugen und in den ADC weiterzugeben, dass dann dort mit einer definierten Rate abgetastet und digitalisiert werden kann. Die digitalen Daten, die die abgetasteten Werte (also jeweils diskrete Werte des Form-Signals für die jeweiligen Abtastzeitpunkte) enthalten, können nun erfindungsgemäss verwendet werden, um mithilfe der bekannten Form des Signals dieses Form-Signal in die Werte auf digitaler Ebene einzupassen (oder anders ausgedrückt: um die Werte zu interpolieren) und somit die zeitliche Lage des Form-Signals präziser zu bestimmen (was natürlich wiederum den Rückschluss auf die zeitliche Lage des Komparatorausgangssignals und somit auf den Zeitpunkt des Überschreitens des Schwellwerts durch das eigentlich zu messende eingehende Signal - wie bspw. ein vom Ziel zurückkommendes Distanzmesssignal - ermöglicht).

Das Form-Signal wird erfindungsgemäss so ausgelegt (ggf. auch abgestimmt auf die Taktrate des Abtastens durch den Analog-Digital-Umsetzer ADC), dass es nach Abtastung und Digitalisierung mit - im Vergleich zu einem fiktiven Abtasten des Komparatorausgangssignals - geringerer Zeit- und Amplitudenunsicherheit in der digitalen Welt rekonstruierbar (also interpolierbar) ist (d.h., sodass die Form und ggf. Amplitude des Form-Signals in die abgetasteten diskreten Werte prinzipiell mit geringerer oder ganz ohne zeitliche Unsicherheit eingepasst werden kann).

Die Signalerzeugungs-Stufe kann im Besonderen derart ausgelegt sein, dass das Form-Signal pulsförmig mit definierter Pulsbreite ausgebildet ist und asynchron zur Abtastrate der Digitalisier-Stufe innerhalb der Pulsbreite mehrmals, insbesondere fortlaufend oder kontinuierlich (dabei im Speziellen zumindest über die Dauer mindestens eines Taktes der Abtastrate hinweg kontinuierlich), seine Intensität ändert.

Die Amplitude des Form-Signals kann zudem so ausgelegt sein, dass dies optimiert ist in Bezug auf den Aussteuerbereich eines nachfolgenden Analog-Digital Wandlers (vorteilhaft also so, dass im Wesentlichen der gesamte Aussteuerbereich des ADCs durch das Signal abgedeckt wird). Dadurch ist eine negative Einschlägigkeit von Quantisierungsfehlern verringerbar.

Unter dem Begriff "asynchron" im Zusammenhang mit der Aussage "asynchron zur Abtastrate mehrmals in seiner Amplitude variierendes Signal" soll dabei nicht "gegengetaktet" (also nicht eine Phasenverschiebung von 180 Grad) verstanden werden, sondern in anderen Zeitabständen als die Taktbreite (insbesondere z.B. kontinuierlich die Signalstärke ändernd, also Steigung der Amplitude des Signals ungleich Null und ungleich "unendlich", bzw. auch nicht nahe Null und nicht nahe "unendlich").

Form und insbesondere auch Amplitude des Form-Signals ist also absichtlich darauf ausgelegt, um nach der Abtastung zur Durchführung einer Sub-Pikosekunden genauen Interpolation geeignete Werte vorliegen zu haben. Es dreht sich also bei der Signalerzeugungs-Stufe um das Ausgeben eines auf post-Abtastungs-Interpolierbarkeit ausgelegtes Form-Signal (mit bekannter Form und Amplitude).

Das Form-Signal kann dabei z.B. ausgebildet sein:
- glockenförmig,
- sägezahnförmig,
- dreieckförmig,
- trapezförmig oder
- stufenförmig (mit Stufen, deren Breite nicht der Breite des Taktes der Abtastrate entspricht, insbesondere z.B. mit randomisierter Stufenbreite).

Das Form-Signal kann dabei zusätzlich eine Amplitude bzw. einen Signalstärkenverlauf aufweisen, der möglichst einen wesentlichen Teil oder gar den gesamten AD-Wandler-Eingangsspannungsbereich umfasst. Dadurch sind die Quantisierungsfehler des ADCs verringert und ggf. sogar komplett vernachlässigbar. Zudem mitteln sich die Einflüsse der mit der Quantisierung verbundenen differenziellen Nichtlinearität (DNL) aus. Unter DNL versteht man dabei die Differenz der Quantisierungsspannung zum nächsten Digitalwert eines ADCs.

Schaltungsseitig umgesetzt werden kann die Signalerzeugungs-Stufe des erfindungsgemässen TDCs dabei z.B. etwa durch mindestens eine Flipflop-Schaltung, insbesondere einen D-Flipflop, oder durch ultraschnelle Logikgatter, jeweils mit wenigstens einem nachgeschalteten Tiefpassfilter.

Die Signalerzeugungs-Stufe kann auch als besondere Ausführungsform zusammen mit der Komparator-Stufe in einer gemeinsamen Elektronikeinheit untergebracht sein, beispielsweise in einem entsprechend schnellen FPGA oder in Form eines Mixed-Signal ASICs.

Nach der Abtastung und Digitalisierung dienen dann die abgetasteten diskreten Werte (die in den digitalen Daten enthalten sind) als Interpolationsfunktion, d.h. als Ausgangsdaten zur Durchführung einer ggf. pikosekundengenauen Interpolation. Anhand dieser Werte und der bekannten Form des Form-Signals wird das Form-Signal (als Interpolante) auf digitaler Ebene anhand an sich bekannter Auswerteverfahren (Algorithmen) eingepasst bzw. rekonstruiert und anschliessend die zeitliche Lage des rekonstruierten und eingepassten Signals abgelesen. Dies ermöglicht dann direkte Rückschlüsse auch auf die präzise zeitliche Lage des Komparatorausgangssignals und damit auch auf den eigentlich gesuchten und zu messenden Zeitpunkt für das eingehende Signal.

Die Auswerteeinheit ist also dazu ausgelegt, eine Zeit (bzw. einen Zeitpunkt) für das eingehende analoge Signal zu bestimmen unter Heranziehung von einer zeitlichen Interpolation der in den digitalen Daten enthaltenen Werte sowie der bekannten Form des Form-Signals.

Ferner betrifft die Erfindung einen optoelektronischen Distanzmesser nach dem Time-of-Flight-Prinzip, wobei dieser nun die zuvor vorgestellte Zeitmessschaltung enthält.

Im Einzelnen weist der Distanzmesser also auf:
- mindestens eine Lichtquelle zum Aussenden wenigstens eines gepulsten Lichtsignals, insbesondere eines Laserlicht-Pulses, auf ein Zielobjekt,
- eine Empfangsschaltung mit einem Detektor (d.h. eine Empfangs-Photodiode wie eine Avalanche-Photodiode (APD), eine positive-intrinsic-negative-Diode (pin-Diode), eine multisegment APD, oder ein single-photon Avalanche Diodenarray (SPAD)) zum Detektieren des vom Zielobjekt zurückkommenden Lichtsignals und einer dem Detektor nachgeschalteten Signalverarbeitungselektronik, und
- eine Auswerteeinheit zum Bestimmen einer Distanz zum Zielobjekt.

Die erfindungsgemässe Zeitmessschaltung bildet dann zumindest Teile der Signalverarbeitungselektronik und der Auswerteeinheit.

Mit der erfindungsgemässen Zeitmessschaltung kann dabei nun verbessert z.B. ein Zeitpunkt dafür bestimmt werden, wann das zurückgekommene detektierte Lichtsignal eine vorgegebene Schwelle überschreitet.

Betrachtet man dabei allerdings den pulsförmigen zurückgekommenen detektierten Lichtsignal über seine Breite, so hängt der Zeitpunkt des Übersteigens eines vorgegebenen Schwellwerts innerhalb dieser Pulsbreite ab von der Amplitude des empfangenen Pulses.

In einem Ausführungsbeispiel kann aus diesem Gesichtspunkt die Komparator-Stufe der Zeitmessschaltung so ausgelegt und so mit Kriterien versehen sein, dass für eine ansteigende Flanke und für eine abfallende Flanke des zurückkommenden detektierten Lichtsignals jeweils ein Komparator-Ausgangssignal erzeugt und ausgegeben wird. Dafür kann die Komparator-Stufe z.B. zwei Komparator-Bauteile aufweisen, einen ersten Komparator für die ansteigende Flanke und einen zweiten Komparator für die fallende Flanke.

Die Auswerteeinheit der Zeitmessschaltung ist dann ferner auch zur Bestimmung einer ersten Zeit, jener für die ansteigende Flanke, und einer zweiten Zeit, jener für die abfallende Flanke, ausgelegt.

Und schliesslich wird dann die gesuchte Distanz zum Zielobjekt abhängig von der bestimmten ersten Zeit (jene für die Überaschreitung des Schwellwerts durch die aufsteigende Flanke) und der bestimmten zweiten Zeit (jene für die Unterschreitung des Schwellwerts durch die absteigende Flanke) bestimmt.

Die dadurch bestimmte Pulsbreite ist also ein Mass für die Signalstärke des Empfangssignals. Diese Signalstärkemessung funktioniert sogar bei elektrischer Übersteuerung der Empfangseinheit. Signalstärkenabhängige Distanzbestimmungs- oder Laufzeitfehler lassen sich mit dieser zweifachen Komparatorschaltung kompensieren oder ganz beheben.

Durch diese Massnahme kann also berücksichtigt werden, dass nicht abhängig von der Amplitudenhöhe des zurückkommenden Pulses (für z.B. eigentlich gleich weit entfernte Ziele, jedoch mit unterschiedlicher Reflektivität) jeweils unterschiedliche Distanzen abgeleitet werden.

Eine weitere mögliche Ausführungsform für die Komparator-Stufe kann auch drei Komparator-Bauteile (Komparatoranordnungen) aufweisen, wobei zwei davon für die steigende Flanke und eine für die fallende Flanke triggern. Eine solche Vorrichtung hat den Vorteil auch Empfangssignale von nahe beabstandeten Doppelzielen messen zu können. Bei solchen Zielen kann es nämlich vorkommen, dass sich die von dem Lichtdetektor erzeugten elektrischen Empfangsimpulse überlappen, und dadurch die Steilheit der ansteigenden Flanke gegenüber einem Einfachziel erhöht wird. Mittels der beiden der steigenden Flanke zugeordneten Komparatoren kann diese Steilheit erfasst und ausgewertet werden. Somit lassen sich Doppelzielmessungen, welche typischerweise an Objektkanten auftreten können, erkennen und korrigieren.

Mittels einer Anordnung aus vier Komparator-Bauteilen kann darüber hinaus sogar eine sub-pikosekunden-genaue Distanzmessung zu Doppelzielen ermöglicht werden. Dadurch sind die vier Parameter (d.h. Reflektivitäten und Distanzen zu Doppelzielen, also effektiv Reflektivität und Distanz jeweils zu zwei Zielen) auflösbar.

Weitere Vorteile - um verbessert extrem hohe Signaldynamiken handhaben zu können - sind bewirkbar, indem z.B. - wie dies an sich bekannt ist - ein Zwei-Kanal-Empfänger vorgesehen wird, mit einem rauscharmen, insbesondere amplituden-linearen WFD-Kanal für den unteren (insbesondere linearen) Signalbereich kombiniert mit einem "Schwellwert"-Kanal für den mittleren und oberen Signalbereich, in dem nun neu jedoch die zuvor beschriebene Zeitmessschaltung vorgesehen ist.

Mit einer solchen Distanzmessvorrichtung kann dann eine verbesserte, d.h. höhere, Messgenauigkeit auch über grosse Signaldynamikbereiche hinweg bereitgestellt werden (z.B. kann ein um ein bis zwei Grössenordnungen erweiterter Dynamikbereich des Empfangssignals mit durchwegs entsprechend hoher Distanzmessgenauigkeit bewältigt werden). Bisherige Distanzmesser mit 14 Bit Auflösung haben typischerweise einen nutzbaren Dynamikbereich von 10 Bit, mit der oben beschriebenen erfindungsgemässen Zeitmessschaltung (TDC-Messvorrichtung) kann - praktischen Versuchen zufolge - der Bereich um mindestens 4 bis 6 Bit erweitert werden.

Im Einzelnen weist gemäss einem solchen Distanzmesser-Ausführungsbeispiel die Signalverarbeitungselektronik also einen ersten und einen zweiten Kanal auf.

Die zuvor mehrfach beschriebene erfindungsgemässe Zeitmessschaltung ist dabei im ersten Kanal vorgesehen, und dieser somit für den Fall einer durch das zurückkommende Lichtsignal bewirkten Ansteuerung des Detektors in seinem mittleren und oberen Amplitudenbereich ausgelegt.

Der zweite Kanal ist für den Fall einer durch das zurückkommende Lichtsignal bewirkten Ansteuerung des Detektors in seinem unteren, linearen Amplitudenbereich vorgesehen und weist dafür WFD-typisch auf
- eine Digitalisier-Stufe zur mit einer definierten Abtastrate erfolgenden Abtastung des detektierten Lichtsignals und Wandlung in abgetastete Werte enthaltende digitale WFD-Daten und
- eine Auswerteeinheit zur Bestimmung einer zeitlichen Lage des detektierten Lichtsignals unter Berücksichtigung einer anhand der abgetasteten Werte nachgebildeten Pulsform für das detektierte Lichtsignal.

Die Auswerteeinheit des Distanzmessers kann dann letztlich so ausgelegt sein, dass die Distanz zum Zielobjekt - eben je nach dem, ob das zurückkommende Lichtsignal den Detektor im mittleren/oberen oder im unteren, linearen Amplitudenbereich angesteuert - entweder unter Auswertung der im ersten Kanal erzeugten digitalen Daten oder unter Auswertung der digitalen WFD-Daten bestimmt wird.

Es können jedoch (z.B. in einem Grenzbereich zwischen Ansteuerung des Detektors im unteren oder im mittleren Amplitudenbereich/Signaldynamikbereich) ggf. auch "beide" digitalen Daten (also aus beiden Kanälen) für die Bestimmung der Distanz zu einem Ziel herangezogen werden.

Die bisher erwähnten Auswerteeinheiten (des ersten und zweiten Kanals und des Distanzmessers) können dabei zusammen durch mindestens ein FPGA und einen Mikroprozessor gegeben sein. D.h., die Auswerteeinheiten sind funktional als verschiedene Auswerteeinheiten beschrieben. Sie können jedoch als eine oder mehrere physische Einheiten (wie etwa ein FPGA oder ein Mikroprozessor, oder ein FPGA und ein Mikroprozessor gemeinsam) umgesetzt sein.

In Analogie zur erfindungsgemässen Zeitmessschaltung betrifft ein weiterer Gegenstand der Erfindung ferner auch eine Zeitmessmethode für ein eingehendes Signal, insbesondere zur Anwendung im Rahmen eines Entfernungsmessens und dabei zum Messen eines Zeitpunkts für einen Retour kommenden Lichtpuls. Im Rahmen dieser Zeitmessmethode erfolgt
- ein fortlaufendes Prüfen eines Erfüllens eines definierten Kriteriums durch das eingehende Signal und einem Ausgeben eines Triggersignals bei Erfüllen des Kriteriums, insbesondere wobei als das Kriterium ein Über- oder Unterschreiten eines Schwellwerts definiert ist,
- ein Erzeugen und Ausgeben eines künstlichen Form-Signals zeitlich fix abhängig von der Ausgabe des Triggersignals, wobei das Form-Signals auf post-Abtastungs-Interpolierbarkeit ausgelegt ist und bekannte Form und insbesondere bekannte Amplitude aufweist,
- ein mit einer definierten Abtastrate erfolgendes Abtasten des Form-Signals und Wandeln in abgetastete Werte für das Form-Signals enthaltende digitale Daten, und
- ein Ableiten eines Zeitpunkts für das eingehende Signal durch Auswertung der digitalen Daten, abhängig von einer Bestimmung einer zeitlichen Lage des Form-Signals, wobei dies unter Heranziehung von einer zeitlichen Interpolation der in den digitalen Daten enthaltenen Werte sowie der bekannten Form des Form-Signals erfolgt.

Das Form-Signal kann dabei insbesondere pulsförmig mit definierter Pulsbreite ausgebildet sein und asynchron zur Abtastrate innerhalb der Pulsbreite mehrmals, insbesondere fortwährend oder kontinuierlich, seine Signalwerte ändern. Im Speziellen kann das Form-Signal z.B. glockenförmig, sägezahnförmig, dreieckförmig, trapezförmig oder stufenförmig ausgebildet sein.

Ferner betrifft die Erfindung - in Analogie zur oben beschriebenen, erfindungsgemässen Distanzmesser - auch eine optoelektronische Distanzmessmethode nach dem Time-of-Flight-Prinzip mit
- einem Aussenden wenigstens eines gepulsten Lichtsignals, insbesondere eines Laserlicht-Pulses, auf ein Zielobjekt,
- einem Detektieren des vom Zielobjekt zurückkommenden Lichtsignals, und
- einem Bestimmen einer Distanz zum Zielobjekt abhängig von einem für das zurückkommenden Lichtsignal abgeleiteten Zeitpunkt, wobei dies erfolgt unter Anwendung der zuvor beschriebenen erfindungsgemässen Zeitmessmethode.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a: eine Prinzipdarstellung eines optoelektronischen Distanzmessers nach dem Stand der Technik,
- Fig. 1b: eine Prinzipdarstellung eines Laufzeitmessverfahrens nach dem Stand der Technik,
- Fig. 2a: eine Prinzipdarstellung eines Schwellwertverfahrens für zurückgestreute Lichtsignale nach dem Stand der Technik,
- Fig. 2b: eine Prinzipdarstellung der Schwellenproblematik des Schwellwertverfahrens,
- Fig. 3a: eine Prinzipdarstellung eines Abtastverfahrens für zurückgestreute Lichtsignale nach dem Stand der Technik,
- Fig. 3b: eine Prinzipdarstellung der Sättigungsproblematik des Abtastverfahrens,
- Fig. 4: ein zeitlicher Verlauf eines eingehenden Signals (etwa ein vom Ziel zurückkommendes detektiertes Lichtsignal), für das beispielhaft wenigstens ein Zeitpunkt bestimmt werden soll,
- Fig. 5: Zeitbestimmung unter Anwendung eines herkömmlichen, nach dem Stand der Technik bekannten TDC-Verfahrens,
- Fig. 6a-d: Graphen für Signalverläufe und abgetastete Daten über der Zeit bezogen auf die einzelnen Stufen und Einheiten der erfindungsgemässen Zeitmessschaltung,
- Fig. 7a-d: verschiedene Varianten für die Gestaltung des Form-Signals nach dem erfindungsgemässen Prinzip,
- Fig. 8: ein Blockschaltbild einer erfindungsgemässe Ausführungsform für die Zeitmessschaltung, wobei diese ein Teil bildet eines erfindungsgemässen Entfernungsmessers mit zusätzlichem WFD-Kanal,
- Fig. 9a,b: die Amplitudenabhängigkeit der gemessenen Laufzeit und eine mögliche Korrekturkurve, und
- Fig. 10: Distanzrauschen einer erfinderischen Ausführungsform mit TDC- und WFD-Kanal.

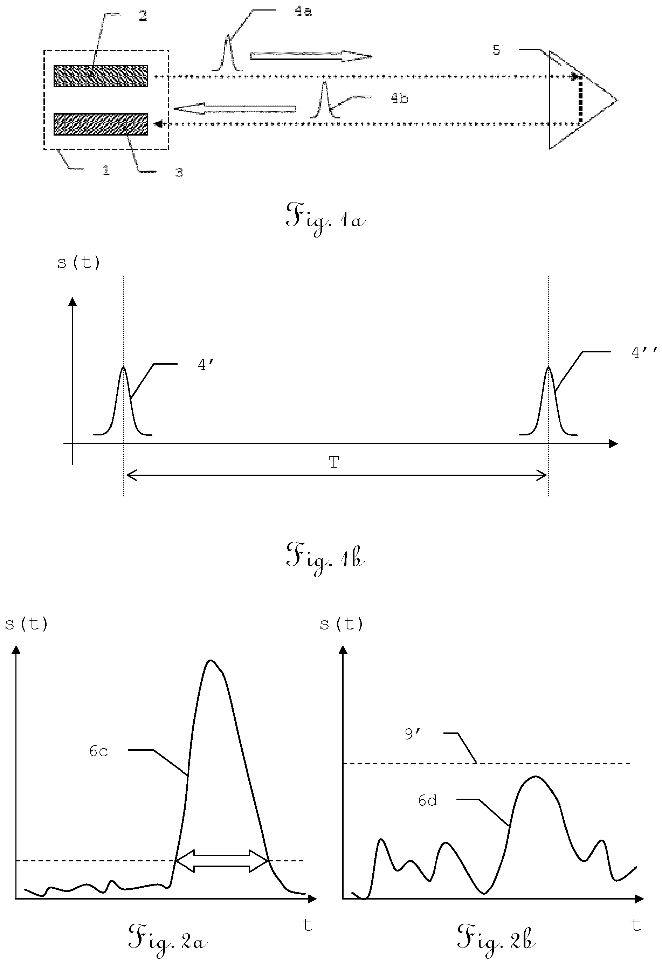

Figur 1a zeigt eine Prinzipdarstellung eines optoelektronischen Distanzmessers 1 des Stands der Technik nach dem Pulslaufzeitprinzip. In dem Distanzmesser 1 sind ein Sender 2 und ein Empfänger 3 angeordnet. Der Sender 2 emittiert einen Lichtpuls 4a, der nach der Reflektion bzw. Rückstreuung an einem Ziel, z.B. einem Retroreflektor 5, wieder als zurückgestreuter Lichtpuls 4b vom Empfänger 3 detektiert wird. Anstelle eines einzelnen Lichtpulses kann erfindungsgemäss auch eine analog oder digital kodierte Impulsfolge oder ein kontinuierlich moduliertes Sendesignal verwendet werden.

Wie in Figur 1b in Prinzipdarstellung erläutert, wird die Entfernung aus der Laufzeit T als zeitliche Differenz zwischen dem Startzeitpunkt des Aussendens eines Lichtpulses 4' und dem Empfangszeitpunkt des zurückgestreuten Lichtpulses 4" ermittelt. Die Ermittlung des Empfangszeitpunktes erfolgt dabei durch die Auswertung eines Merkmals des Signalimpulses s(t), z.B. durch das Überschreiten einer Signalschwelle oder durch Schwerpunktbestimmung des integrierten Pulsverlaufs. Beim Schwellwertverfahren sind auch andere Methoden zur Messung der Laufzeit T nutzbar, wie beispielsweise die Umwandlung des Empfangssignals in ein bipolares Signal und anschliessende Bestimmung des Nulldurchgangs.

In Figur 2a wird ein Schwellwertverfahren für zurückgestreute Lichtsignale 6c nach dem Stand der Technik erläutert. Um Rauschen, Hintergrundanteile oder systematische Störsignale wie beispielsweise durch das optische und elektrische Übersprechen zwischen Sendersignalweg und Empfängersignalweg zu unterdrücken und von einer Detektion auszuschliessen, wird eine Detektionsschwelle 9 (etwa in Form eines Komparator-Bauelements) verwendet. Unterhalb dieser Detektionsschwelle 9 liegende Signalintensitäten s(t) führen nicht zu einem Ansprechen des ein Stoppsignal generierenden Komparators als Diskriminator und somit nicht zu einer Detektion. Überschreitet das Signal 6c in seiner Intensität die Detektionsschwelle 9 erfolgen die Detektion und damit die Erzeugung des Stoppsignals und die Registrierung des Empfangszeitpunktes. Das von dem Schwellwertverfahren bereitgestellte Ausgangsignal ist somit abhängig vom Erreichen bzw. Überschreiten der Detektionschwelle 9 durch das empfangene bzw. Eingangssignal. Bleibt die Signalintensität s(t) jedoch wie im Beispiel der Figur 2b dargestellt, stets unterhalb einer Detektionsschwelle 9', so kommt es zu keinem Ansprechen des Diskriminators (Komparators) und das Signal 6d wird nicht detektiert. Diese Schwellenproblematik des Schwellwertverfahrens tritt beispielsweise bei grossen Messdistanzen oder entsprechenden Hintergrundeinflüssen auf, welche die nötige Schwellenhöhe des Schwellensignals nach oben treiben können. Dies ist auch der Fall bei einem Proportionaldiskriminator (constant fraction discriminator), bei welchem die Triggerschwelle proportional zur Maximalamplitude variiert wird. Bei kleinen Signalen kann die Triggerschwelle nicht ausreichend reduziert werden, da sonst Zufallsrauschen Empfangszeitmarken auslösen würde.

Die reine Schwellwertmethode gewährt üblicherweise geringere Distanzbestimmungs-Genauigkeiten als die im Folgenden erwähnte Abtastmethode (WFD-Prinzip), zumindest wenn der empfangene Puls nicht in der Sättigung des Detektors liegt.

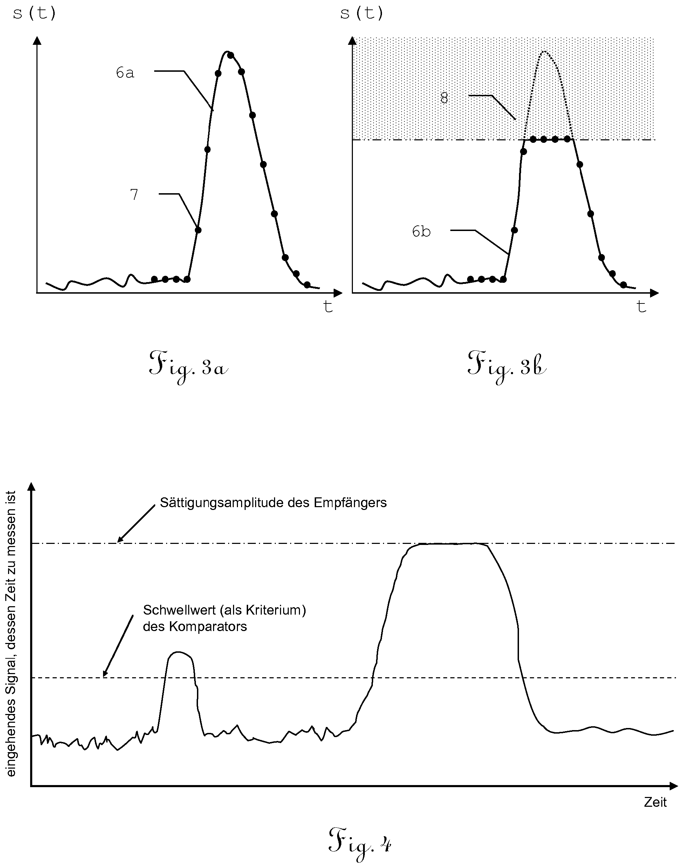

Figur 3a veranschaulicht das Prinzip eines Abtastverfahrens (WFD) für zurückgestreute Lichtsignale nach dem Stand der Technik. Ein empfangenes Signal 6a bzw. dessen Signalverlauf wird zu verschiedenen Zeitpunkten 7 bzw. zugeordneten Zeitintervallen abgetastet, so dass sich die Signalform ableiten lässt. Um auch grosse Variationen des Signalimpulses s(t) detektieren zu können, ist empfängerseitig eine hohe Dynamik erforderlich, welche die vollständige Erfassung bzw. Abtastung des Signals 6a erlaubt. Anderenfalls kann die in Figur 3b dargestellte Situation auftreten, wenn Teile des Signals 6b ausserhalb des Dynamikbereichs liegen und es zu einer Sättigungsproblematik des Abtastverfahrens kommt. Oberhalb einer Sättigungsgrenze existiert ein gesättigter Bereich 8 des Empfängers, in dem keine sinnvoll nutzbaren Abtastwerte des Pulses zur Verfügung stehen. Die Nutzung der abgetasteten Werte für die Bestimmung der zeitlichen Lage des Pulses wird dann auf den unterhalb der Sättigungsgrenze liegenden Bereich beschränkt. Insbesondere bei einer hohen Flankensteilheit ist eine Bestimmung des Signalform und Lage dann schwierig.

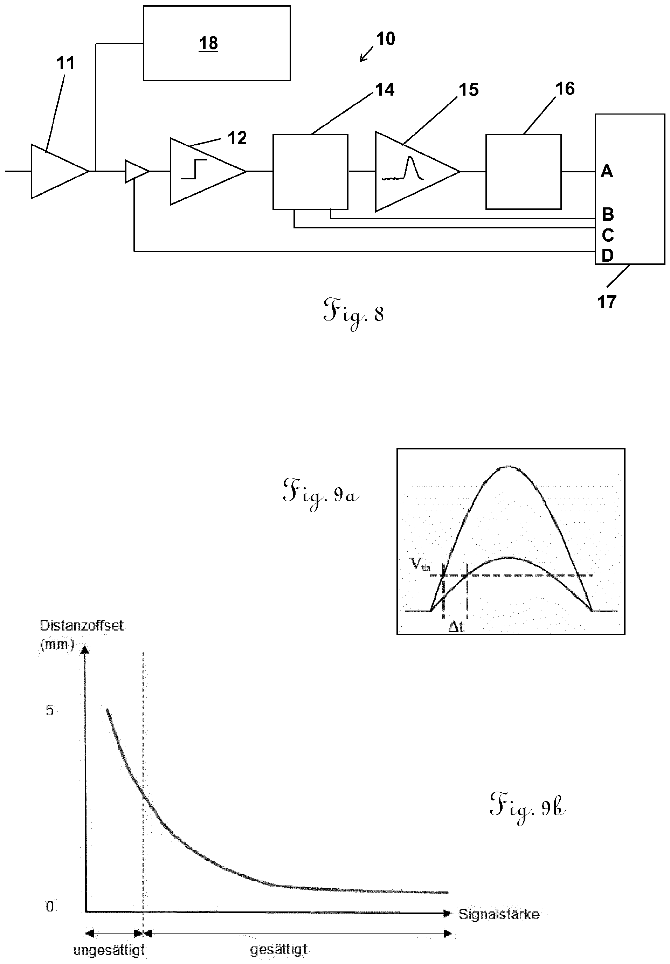

Figur 4 zeigt einen zeitlichen Verlauf eines eingehenden, elektrischen Signals, für das beispielhaft wenigstens ein Zeitpunkt bestimmt werden soll. Der mittelgrosse Impuls im vorderen Teil des Zeitsignals erzeugt ein erstes Triggerereignis, der zweite, gesättigte Impuls im hinteren Teil des Zeitsignals erzeugt ein weiteres Triggerereignis. Die Komparator-Stufe und die Signalerzeugungs-Stufe der erfindungsgemässen Zeitmessschaltung erzeugen nun für jeden Impuls ein Pikosekunden-genaues Form-Signal mit konstanter Amplitude, das einem GHz-schnellen AD-Wandler zugeleitet und dort digitalisiert wird. Aus der Datenfolge lassen sich mit bekannten algorithmischen Methoden sub-Pikosekunden-genaue Zeitinterpolationen realisieren. Da dieses dem AD-Wandler zugeführte Form-Signal unabhängig von der Amplitude der Empfangsimpulse ist, treten keine Dynamikfehler auf. Die optionale Behebung der an der Komparator-Stufe auftretenden amplitudenabhängigen Zeitverschiebungen oder Distanzoffsets werden in Figur 9a und 9b beispielhaft erklärt.

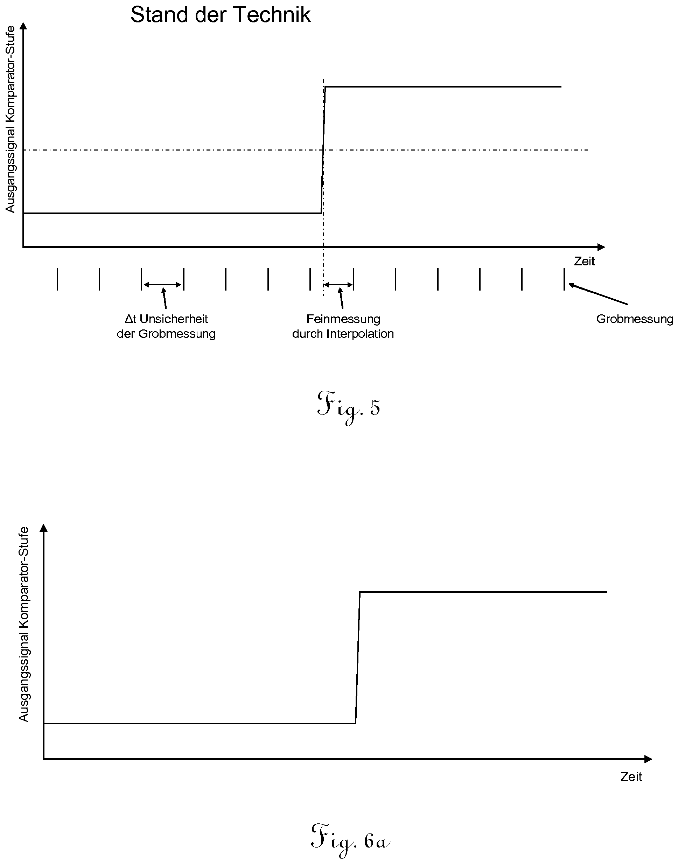

Figur 5 zeigt die Zeitbestimmung unter Anwendung eines herkömmlichen TDC-Verfahrens. In einem ersten Schritt wird die Zeit in einer Grobmessung bestimmt, dies wird mit einem Quarz-genauen Zähler realisiert. Die verbleibende Unsicherheit des Triggerzeitpunkts Δt wird in einem zweiten Schritt mittels eines Zeitinterpolators, also einer zusätzlichen Schaltungsanordnung, bestimmt. Dies kann z.B. eine Kapazität sein, die durch eine getriggerte Konstantstromquelle aufgeladen und anschliessend ausgelesen wird. Diese herkömmlichen Schaltungsanordnungen zur Zeitinterpolation haben bisher in der Regel eine Genauigkeit von bestens 10ps erreicht.

Figuren 6a-6d zeigen Graphen für Signalverläufe und abgetastete Daten über der Zeit bezogen auf die einzelnen Stufen und Einheiten der erfindungsgemässen Zeitmessschaltung.

Figur 6a zeigt das Ausgangssignal der Komparatorstufe der erfinderischen Vorrichtung. Der Schritt im Signal wird erzeugt, wenn z.B. die ansteigende Flanke des eingehenden, zu analysierenden Signals (z.B: das durch einen LichtDetektor erzeugte und dann verstärkte Signal) den definierten Schwellwert übersteigt. Das Ausgangssignal der Komparatorstufe hat beispielsweise wie dargestellt dann die Form einer Picosekunden-schnellen digitalen Schrittfunktion.

Die Komparatorstufe kann dann so ausgelegt sein, dass das Ausgangssignal solange oben bleibt, bis ein separates Reset-Signal (z.B. von einem FPGA oder DSP) zugeführt wird.

Das Ausgangssignal der Komparatorstufe wird der Signalerzeugungs-Stufe zugeführt.

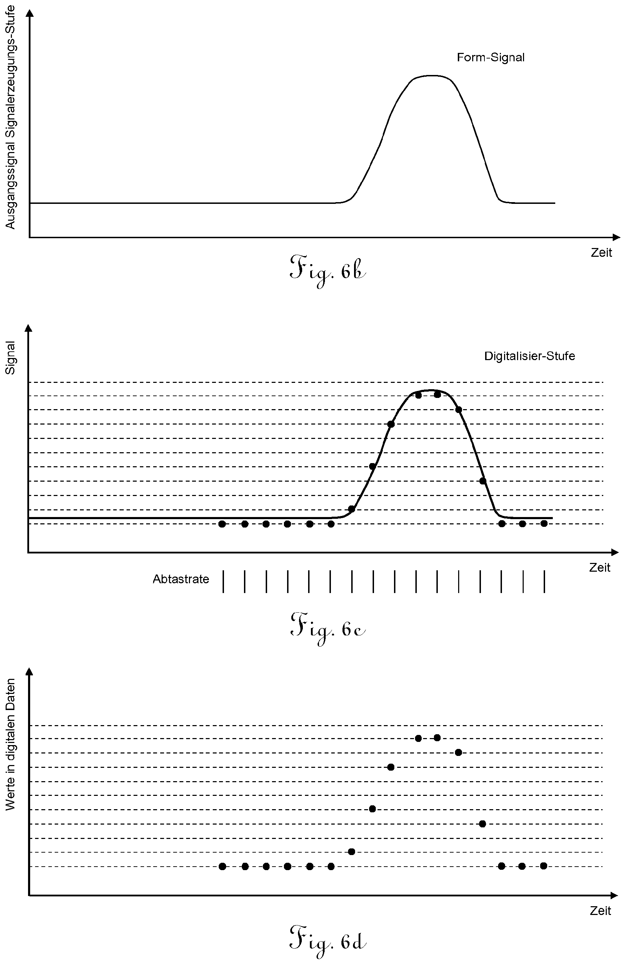

Figur 6b zeigt das zeitlich fix abhängig vom Erhalt des Komparator-Ausgangssignals durch die Signalerzeugungs-Stufe generierte und ausgegebene Form-Signal. Das Form-Signal ist dabei ein auf post-Abtastungs-Interpolierbarkeit ausgelegtes Signal bekannter Form und insbesondere bekannter Amplitude.

In der gezeigten Ausführungsform weist das Form-Signal Pulsform auf, mit bekannter Form, Amplitude und Breite.

In einer speziellen Ausführungsform kann ein solches Signal beispielsweise erzeugt werden durch eine FlipFlop-Schaltung bzw. durch ein Logic Gatter.

Dadurch kann zunächst ein kurzer Rechteck-Puls definierter Amplitude, mit z.B. einer Breite von unter einer Nanosekunde, erzeugt werden.

Dieser Rechteck-Puls kann dann durch einen entsprechenden Low-Pass-Filter (Tiefpassfilter) gefiltert werden, wodurch dann ein Glockenformpuls (mit bekannter Form, und auch mit bekannter, im Wesentlichen zum Rechteck-Puls unveränderter Amplitude und Breite) entsteht, wie in Figur 6b beispielhaft dargestellt.

Das erzeugte Form-Signal kann dann der Digitalisier-Stufe (d.h. z.B. einem ADC) zugeführt werden. Diese tastet das ihr zugeführte Signal ab mit einer definierten Abtastrate und wandelt es in abgetastete Werte enthaltende digitale Daten.

Figur 6c stellt beispielhaft den Vorgang der Quantifizierung und Digitalisierung des Form-Signals dar. Die Amplitude dieses künstlichen Form-Signals kann dabei insbesondere so gewählt sein, dass sie einen Grossteil des Signalbereichs des ADCs zwischen dem niederwertigsten und dem höchstwertigsten Bit (LSB (least significant bit) und MSB (most significant bit)) abdeckt.

Figur 6d stellt die durch die Digitalisier-Stufe (wie ADC) erzeugten digitalen Daten dar, die dann die abgetasteten Werte für das Eingangssignal des ADC (also für das Form-Signal) enthalten. Die digitalen Daten enthalten also mit anderen Worten dann eine digitale Signalfolge mit der relevanten Impulsinformation, was dann als Input-Datensatz für den Zeitinterpolationsalgorithmus dient.

Die Abtastrate der Digitalisier-Stufe (des ADCs) kann dabei beispielsweise etwa zwischen 200 MHz und 10 GHz liegen.

Das gesampelte Form-Signal (also die dafür abgetasteten Werte, die nun in den digitalen Daten enthalten sind) kann schliesslich durch an sich bekannte Zeitinterpolationsalgorithmen hinsichtlich seiner zeitlichen Lage ausgewertet werden. Beispielsweise ist eine solche Zeitinterpolationsmethode in der Publikationsschrift WO 2011/076907 beschrieben, wobei mit einer solchen Methode dann Zeitinterpolationsgenauigkeiten im Sub-Pikosekunden-Bereich erzielbar sind.

Bei einem Distanzmesser, bei dem für das Messen der Laufzeit des Lichts auch ein sogen. Start-Puls (ggf. gegeben durch einen optischen Start-Referenzpuls, der detektiert wird) zeitlich bestimmt wird (d.h. ein erster Start-Zeitpunkt für den sogen. Start-Puls bestimmt wird), kann insbesondere durch ein Resampling (d.h. durch eine Abtastratenkonvertierung) dafür gesorgt werden, dass für das Sampling des Start-Pulses und das Sampling des - hier dann in der Regel als Stopp-Puls dienenden - Form-Signals das identische Sampling-Raster anliegt. Damit kann die Genauigkeit der Laufzeitbestimmung weiter erhöht werden.

Die Auswerteeinheit (ggf. - zumindest teilweise - gegeben durch ein FPGA) kann im Speziellen in Echtzeit (d.h. z.B. mit einer Rate von grösser als 1 MHz) unter Anwendung eines entsprechenden Wellenform-Algorithmus als Zeitinterpolation dann die Laufzeit des Lichts bestimmen als vergangenen Zeit zwischen dem für den als Start-Puls dienenden Referenzpuls bestimmten ersten Zeitpunkt und dem für das Form-Signal bestimmten zweiten Zeitpunkt. Über diese Laufzeit kann dann die gesuchte Entfernung zum Ziel abgeleitet werden.

Analog dazu kann dieses Prinzip der Abtastratenkonvertierung (Resampling) auch angewendet werden für zwei Form-Signale, die nacheinander einmal für die ansteigende Flanke des Pulses des eigentlich eingehenden Signals und einmal für die abfallende Flanke des Signals generiert werden (was - siehe auch die Beschreibung zu Figuren 9b und 9b - zur Anwendung kommen kann um ein so genanntes, bei der Schwellwertmethode möglicherweise auftretendes Range-Walk zu korrigieren). Bezugnehmend auf die Ausführungsform der Schaltung wie in Figur 8 dargestellt, wobei die Impulserzeuger-Komponente 14 aus zwei FlipFlops aufgebaut sein kann, können etwa die beiden durch die FlipFlops erzeugten Rechteck-Pulse (für die ansteigende und die abfallende Flanke) kombiniert werden mit einem Oder-Gatter nach den FlipFlops und dann dem Teifpassfilter zugeführt werden. Der zweite Puls wird dann demselben ADC zugeführt.

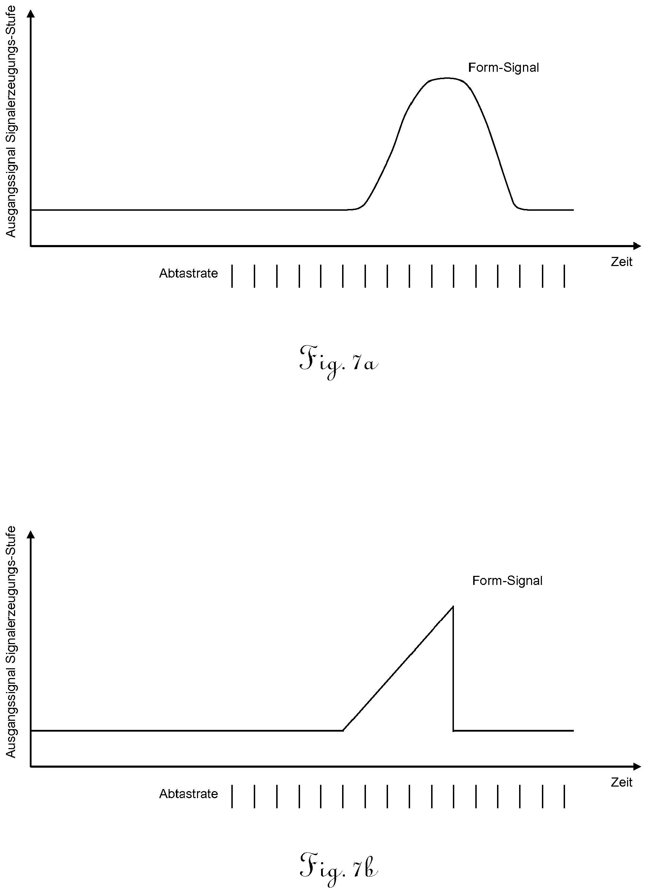

In den Figuren 7a bis 7d sind verschiedene Varianten für die Gestaltung des Form-Signals nach dem erfindungsgemässen Prinzip dargestellt, wobei diese jeweils für eine optimale post-Abtastungs-Interpolierbarkeit ausgelegt sind.

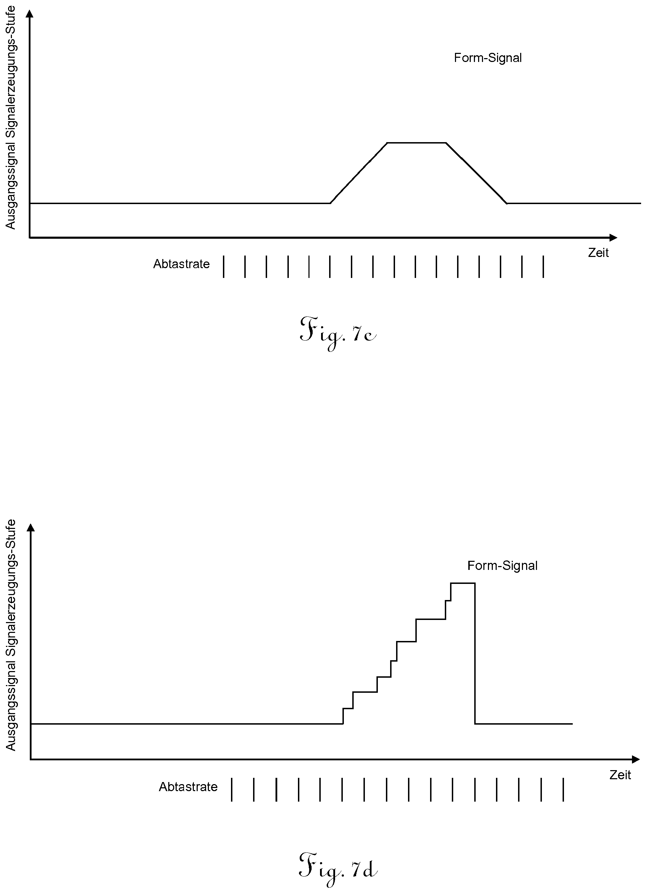

Figur 7a zeigt einen glockenförmigen Form-Puls als Form-Signal, Figur 7b einen sägezahnförmigen, Figur 7c einen trapezförmigen und Figur 7d einen stufenförmigen.

Die künstlichen Pulse aus Figuren 7a und 7b ändern ihre Signalwerte über die gesamte Pulsbreite hinweg kontinuierlich.

Der künstliche Puls aus Figur 7c ändert seine Signalwerte innerhalb der Pulsbreite zumindest teilweise - über mehrere Abtastperioden hinweg - kontinuierlich.

Der künstliche Puls aus Figur 7d ändert seine Signalwerte mehrmals innerhalb der Pulsbreite, wobei das Ändern asynchron zur Abtastrate erfolgt.

Figur 8 zeigt ein Blockschaltbild einer erfindungsgemässen Zeitmessschaltung 10 nach dem Schwellwertprinzip (zumindest in einem ersten Kanal der Empfangsschaltung) mit einem erfindungsgemässen digitalen Zeitwandler ("Time-to-Digital Converter", TDC). Das durch einen Strom-Spannungs-Wandler (TIA, Transimpedanzverstärker) 11 gewandelte Detektionssignal eines Photodetektors (z.B. APD) wird im ersten Kanal (Schwellwertkanal), einer Komparator-Stufe (Diskriminator) 12 zugeführt, welche durch einen ansteigenden Rechteck-Puls angedeutet ist. Optional kann dabei das dem Komparator 12 zugeführte Signal vorgeschaltet gedämpft werden durch einen VGA, der insbesondere als ein VGA mit regulierbarer Dämpfung ausgebildet ist. Sofern das am Komparator anliegende Signal einen vorgegebenen Schwellwert überschreitet, wird ein Komparator-Ausgangssignal 13 erzeugt, welches einer Signalerzeugungs-Stufe mit einer Impulserzeuger-Komponente 14 zugeführt wird, die beispielsweise zwei elektronische Flip-Flop-Schaltungen (d.h. bistabile Kippglieder, high-speed Logikgatter, nicht dargestellt) umfassen kann. Mit der Signalerzeugungs-Stufe, die ggf. noch einen der Impulserzeuger-Komponente nachgeschalteten Tiefpass-Filter 15 enthalten kann, wird gemäss einer Ausführungsform ein analoges, definiertes pulsförmiges Signal mit einem definierten zeitlichen Verlauf und definierter Amplitude (ggf. auf den Signalbereich des ADCs hin optimiert) erzeugt. Dieses synthetisch erzeugte Signal wird dann einer schnellen, signalauflösenden Analog-Digital-Wandlerschaltung (ADC) 16 mit angepasster Zeit- und Amplitudenauflösung zugeführt. Die Abtastdaten werden in Echtzeit oder "pipelined" in einer entsprechend ausgelegten Elektronik-Hardware 17 ("FPGA") verarbeitet. Ein "Field Programmable Gate Array" ist ein integrierter Schaltkreis (IC) der Digitaltechnik, in den eine logische Schaltung programmiert werden kann. Die englische Bezeichnung kann übersetzt werden als "im (Anwendungs-)Feld programmierbare (Logik-)Gatter-Anordnung". Im Stand der Technik sind vielfältige Ausführungsformen von FPGA's bekannt. Angedeutet sind in Figur 8 verschiedene Anschlüsse des FPGA 17, nämlich "A" für den Eingang künstlich erzeugter und unabhängig von der Amplitude des ursprünglich eingehenden Signals, Flanken-getriggerter Form-Signale, "B" für das Setzen der Pulslänge, "C" für ein "Reset" zu Beginn eines Start-/Stopp-Zeitfensters und "D" für die Einstellung der Empfindlichkeit des VGA. Am Eingang A liegt also ein durch das eigentlich eingehende Signal (z.B. detektierter Lichtpuls, und dabei durch Überschreitung einer Schwelle) getriggertes Form-Signal an. Mit diesen Funktionalitäten wird, zusammen mit den dem FPGA vorgeschalteten Komponenten 14, 15 und 16, eine Zeitmessschaltung TDC realisiert, wobei jedoch die eingesetzten elektronischen Komponenten sowie die Auswertung der zeitlichen Lage des Form-Signals vom Prinzip her denjenigen einer bekannten WFD-Schaltung mit höchster Zeitauflösung entsprechen.

In einer weiteren (nicht dargestellten) Ausführungsform kann die Zeitmessschaltung 10 einen zusätzlichen zweiten Signalkanal 12,13,14,15,16 nach dem Schwellwertprinzip aufweisen. Dieser kann sich von dem oben beschrieben Kanal unterscheiden durch einen Komparator 12, welcher auf die fallende Flanke des Eingangssignals triggert. Der FPGA 17 ermittelt zusammen mit dem Ergebnis aus dem ersten Kanal die Breite des Eingangssignals. Diese Breite wird herangenommen, um eine durch die unbekannte Amplitude des eigentlich eingehenden Signals verursachten Distanzoffset (also einen dann in Folge durch den Diskriminator 12 verursachten Distanzoffset) zu beheben.

In einer noch weiter speziell ausgebauten Ausführungsform kann die Zeitmessschaltung 10 einen dritten Kanal 12,13,14,15,16 nach dem Schwellwertprinzip enthalten. Dieser unterscheidet sich von den beiden bisherigen TDC-Kanälen durch einen Komparator 12, welcher auf die steigende Flanke des Eingangssignals bei einem sich vom ersten Kanal unterscheidenden Signalschwellwert triggert.

Dadurch werden zwei Messpunkte auf der steigenden Flanke erfasst, der nachgeschaltete FPGA bestimmt daraus die Steigung der Flanke. Ist die Steigung nicht im erwarteten Verhältnis zur Pulsbreite, so liegt eine Störung des Empfangssignals durch eine besondere Anordnung des Lasermessstrahls zum Zielobjekt vor. Trifft der Laserstrahl beispielsweise an eine Objektkante teilweise das erste Objekt und ein dahinterliegendes, so entsteht ein Zweifachreflex. Sind die beiden Objekte nah beabstandet (< 1m) so überlappen sich die beiden zugeordneten elektronischen Empfangspulse und die Relation zwischen Steilheit der Anstiegsflanke zu Pulsbreite weicht von einem vorgängig bestimmten Referenzwert ab. Dadurch lassen sich Doppelziele, die zu Überlappung von Empfangsimpulsen führen, erkennen, korrigieren oder zumindest teilweise eliminieren.

Alternativ kann man die Anzahl der TDC-Kanäle erhöhen, ohne dass die Komplexität der gesamten Distanzmesschaltung sich wesentlich erhöht. Bei einem vierten Kanal 12,13,14,15,16 nach dem Schwellwertprinzip können die einzelnen den Doppelzielen zugeordneten Distanzen in jedem Fall und ohne apriori Annahmen sogar genau gemessen werden.

Optional kann - wie in Figur 8 angedeutet - zur oben beschriebenen TDC-Zeitmessschaltung noch eine herkömmliche WFD-Zeitmessschaltung 18 in paralleler Anordnung bestückt sein. Dieser Kanal besteht im Wesentlichen aus einer Verstärkerstufe, einem Tiefpass- oder Bandpassfilter, einem AD-Wandlerkanal. Die durch den ADC erzeugten digitalen Daten können insbesondere demselben FPGA 17 zugeleitet werden wie die Daten des TDC-Kanals (oder ggf. der mehreren TDC-Kanäle).

Figur 9a veranschaulicht einen potenziell auftretenden signalstärkenabhängigen Distanzfehler (Time walk oder range walk).

Abhängig von der Höhe der Amplitude des eigentlich eingehenden Signals wird ein gesetzter oder pendelnder Schwellwert (Vth) der Komparator-Stufe des TDCs im Vergleich zueinander entweder vergleichsweise früh oder spät überschritten. Und dieser Überschreitungs-Zeitpunkt bestimmt den für das Erzeugen des Stopp-Signals relevanten Augenblick. Dieser Überschreitungs-Zeitpunkt variiert also nun abhängig von der Amplitude des eigentlich eingehenden Signals, was "range walk error" genannt wird und kompensiert werden kann durch Kenntnis über die Breite des eigentlich eingehenden Signalpulses. Diese Breite des Signalpulses kann bestimmt warden durch Bestimmung eines Zeitpunkts für das Unterschreiten des Schwellwerts auf Seiten der absteigenden Flanke des Signalpulses, was wiederum mithilfe eines darauf ausgelegten zweiten Komparators erfolgen kann.

Figur 9b zeigt den in der Regel, aber nicht notwendigerweise, monotonen Zusammenhang zwischen Distanzoffset (also Time- oder Range Walk) und Signalstärke, was erfolgen kann anhand einer Pulsbreitenmessung mittels der TDC-Vorrichtung. Die Signalstärke wird gebraucht, um den Einfluss des Time- oder Range-Walks zu kompensieren (Kalibrierung).

Die Kurve zeigt im Prinzip auch die systematische Distanzabweichung, wenn auf eine fixe Distanz gemessen wird und das Empfangssignal von sehr kleinen Amplituden bis beispielsweise zu 20ig-facher Übersteuerung verändert wird.

Diese systematische Distanzabweichung kann durchwegs sehr reproduzierbar sein.

Ersichtlich ist, dass der TDC eher für den oberen Signalbereich bis zur mehrfachen Signalübersteuerung geeignet ist und dort wegen dem beinahe konstanten Distanzoffset hohe Distanzmessgenauigkeit liefert.

Im unteren Signalbereich zeigt der TDC eine stärkere Signalabhängigkeit des Distanzoffsets. Die Zeitbestimmung nach dem WFD-Prinzip (d.h. Wellenformdigitalisierung direkt des eigentlich eingehenden Signals und Bestimmung der zeitlichen Lage durch Zeitinterpolation anhand der direkt für dieses Signal erhaltenen Werte) hingegen hat im unteren Signalbereich Vorteile, da dieser eher kleineres Rauschen und zudem praktisch keinen signalabhängigen Distanzoffset aufweist. Auch kann ein herkömmlicher WFD durch Signalakkumulation genaue Distanzmessung aus stark verrauschten Signalen herausholen.

Ein erfinderischer 2-Kanal Distanzmesser bestehend aus einem WFD- und einem TDC-Kanal zeichnet sich durch eine über einen erweiterten Signaldynamikbereich hinweg sehr hohe Distanzmessgenauigkeit im sub-mm oder pm-Bereich aus, dies unabhängig von der Amplitude des Empfangssignals. Im unteren Signalbereich, welcher typischerweise beim Anmessen auf schwarze oder nasse Ziele auftritt, bestimmt der WFD die Distanz zum Objekt, bei ungenügendem Signal-zu-Rauschverhältnis (SNR) wird zudem mit adaptiver Akkumulation des digitalen Signalvektors vorgängig zur Distanzauswertung das SNR angehoben und dadurch die Streuung des Messergebnisses verbessert. Beim Anmessen auf helle, glänzende oder reflektierende Objekte ist der TDC-Kanal die Vorteile bringende Wahl, wo die Signalstärken im oberen bis gesättigten Aussteuerbereich des Empfängers liegen. Die TDC-Anordnung ermöglicht bereits ab mittleren Signalstärken eine Sub-Millimeter-Genauigkeit.

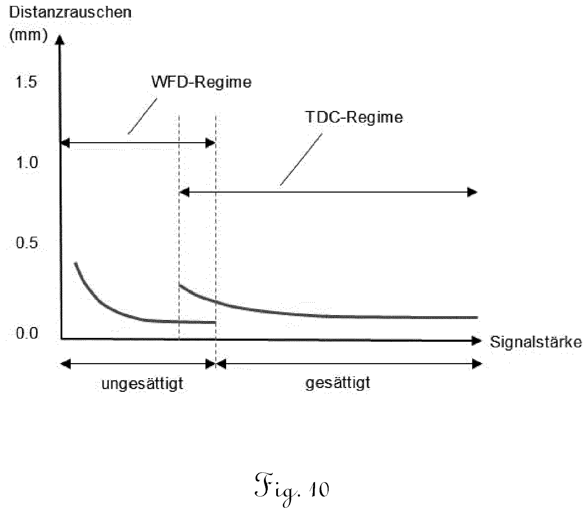

Figur 10 zeigt den Distanzjitter (Rauschen) des TDC-Kanals mit der erfindungsgemässen Zeitmessschaltung (Kurve rechts oben) und des linearen WFD-Kanals (Kurve links unten) bei Einzelschussauswertung.

Bei kleinen Signalamplituden zeigt der WFD besseres Verhalten als der TDC-Kanal. Bei Übersteuerung hingegen liefert der WFD-Kanal keine brauchbaren Ergebnisse mehr und der TDC-Kanal kommt hier zum Einsatz, das Distanzrauschen ist durchwegs kleiner 0.4mm bei allen Graden der Signalübersteuerung. Optional kann die Distanzmessung mehrfach ausgeführt werden (Akkumulation, Moving Average, etc.), dadurch können Genauigkeiten im Mikrometer-Bereich erreicht werden.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Zeitmessschaltung (10) für ein eingehendes Signal, insbesondere zur Anwendung als Teil einer Empfangsschaltung eines Entfernungsmessers und dabei zur Messung eines Zeitpunkts für einen Retour kommenden Lichtpuls,
mit
• einer Komparator-Stufe (12) zur Erzeugung eines Komparator-Ausgangssignals abhängig von einer Erfüllung eines Kriteriums durch das eingehende Signal, insbesondere wobei als das Kriterium ein Über- oder Unterschreiten eines Schwellwerts definiert ist,
• einer Digitalisier-Stufe (16) zur mit einer definierten Abtastrate erfolgenden Abtastung eines der Digitalisier-Stufe zugeführten Eingangssignals und Wandlung in abgetastete Werte für das Eingangssignal enthaltende digitale Daten, und
• einer Auswerteeinheit (17) zur Bestimmung einer zeitlichen Lage für das eingehende Signal durch Auswertung der digitalen Daten,
**dadurch gekennzeichnet, dass**
• zwischen der Komparator-Stufe (12) und der Digitalisier-Stufe (16) eine Signalerzeugungs-Stufe (14, 15) zwischengeschaltet ist, welche dafür ausgelegt ist, um zeitlich fix abhängig vom Erhalt des Komparator-Ausgangssignals ein auf post-Abtastungs-Interpolierbarkeit ausgelegtes Form-Signal bekannter Form und insbesondere bekannter Amplitude zu generieren, wobei das Form-Signal als das Eingangssignal der Digitalisier-Stufe (16) zugeführt wird, und dass
• die Auswerteeinheit (17) ausgelegt ist, um eine Zeit für das eingehende Signal zu bestimmen unter Heranziehung von einer zeitlichen Interpolation der in den digitalen Daten enthaltenen Werte sowie der bekannten Form des Form-Signals.

2. Zeitmessschaltung nach Anspruch 1,
**dadurch gekennzeichnet, dass**
die Signalerzeugungs-Stufe (14, 15) derart ausgelegt ist, dass das Form-Signal pulsförmig mit definierter Pulsbreite ist und asynchron zur Abtastrate der Digitalisier-Stufe innerhalb der Pulsbreite mehrmals, insbesondere fortwährend oder kontinuierlich, seine Signalwerte ändert,
insbesondere wobei das Form-Signal
• glockenförmig,
• sägezahnförmig,
• dreieckförmig,
• trapezförmig oder
• stufenförmig
ausgebildet ist.

3. Zeitmessschaltung nach Anspruch 1,
**dadurch gekennzeichnet, dass**
die Signalerzeugungs-Stufe mindestens eine Flipflop-Schaltung (14), insbesondere einen D-Flipflop, und einen Tiefpassfilter (15) umfasst.

4. Optoelektronischer Distanzmesser nach dem Time-of-Flight-Prinzip, mit
• mindestens einer Lichtquelle zum Aussenden wenigstens eines gepulsten Lichtsignals, insbesondere eines Laserlicht-Pulses, auf ein Zielobjekt,
• einer Empfangsschaltung mit einem Detektor zum Detektieren des vom Zielobjekt zurückkommenden Lichtsignals und einer dem Detektor nachgeschalteten Signalverarbeitungselektronik, und
• einer Auswerteeinheit zum Bestimmen einer Distanz zum Zielobjekt,
**dadurch gekennzeichnet, dass**
als Teile der Signalverarbeitungselektronik und der Auswerteeinheit eine Zeitmessschaltung (10) nach einem der Ansprüche 1 bis 3 vorgesehen ist.

5. Distanzmesser nach Anspruch 4,
**dadurch gekennzeichnet,**
• **dass** die Komparator-Stufe der Zeitmessschaltung so ausgelegt und so mit Kriterien versehen ist, dass für eine ansteigende Flanke und für eine abfallende Flanke des zurückkommenden detektierten Lichtsignals jeweils ein Komparator-Ausgangssignal erzeugt und ausgegeben wird,
• **dass** die Auswerteeinheit der Zeitmessschaltung zur Bestimmung einer ersten Zeit, jener für die ansteigende Flanke, und einer zweiten Zeit, jener für die abfallende Flanke, ausgelegt ist, und
• **dass** die Auswerteeinheit des Distanzmessers zur Ableitung einer Distanz zum Zielobjekt abhängig von der bestimmten ersten Zeit und der bestimmten zweiten Zeit ausgebildet ist.

6. Distanzmesser nach Anspruch 4 oder 5,
**dadurch gekennzeichnet,**
• **dass** die Komparator-Stufe der Zeitmessschaltung so ausgelegt und so mit Kriterien versehen ist, dass für eine ansteigende Flanke des zurückkommenden detektierten Lichtsignals abhängig von zumindest einer ersten und einer zweiten gesetzten Triggerschwelle jeweils ein Komparator-Ausgangssignal erzeugt und ausgegeben wird,
• **dass** die Auswerteeinheit der Zeitmessschaltung zur Bestimmung einer ersten Zeit, jener für das Übersteigen der ersten Triggerschwelle, und einer zweiten Zeit, jener für das Übersteigen der zweiten Triggerschwelle, ausgelegt ist, und
• **dass** die Auswerteeinheit des Distanzmessers zur Ableitung einer Distanz zum Zielobjekt abhängig von der bestimmten ersten Zeit und der bestimmten zweiten Zeit ausgebildet ist, insbesondere wobei abhängig von der bestimmten ersten Zeit und der bestimmten zweiten Zeit ferner auch eine Qualitätsangabe über die Distanzbestimmung ableitbar ist.

7. Distanzmesser nach einem der Ansprüche 4 bis 6,
**dadurch gekennzeichnet,**
**dass** die Signalverarbeitungselektronik einen ersten und einen zweiten Kanal aufweist, wobei
• die Zeitmessschaltung im ersten Kanal und dieser somit für den Fall einer durch das zurückkommende Lichtsignal bewirkten Ansteuerung des Detektors in seinem mittleren und oberen Amplitudenbereich vorgesehen ist, und
• der zweite Kanal (18) für den Fall einer durch das zurückkommende Lichtsignal bewirkten Ansteuerung des Detektors in seinem unteren, insbesondere linearen Amplitudenbereich vorgesehen ist und dafür aufweist
□ eine Digitalisier-Stufe zur mit einer definierten Abtastrate erfolgenden Abtastung des detektierten Lichtsignals und Wandlung in abgetastete Werte enthaltende digitale WFD-Daten und
□ eine Auswerteeinheit zur Bestimmung einer zeitlichen Lage des detektierten Lichtsignals unter Berücksichtigung einer anhand der abgetasteten Werte nachgebildeten Pulsform für das detektierte Lichtsignal,
und **dass**
die Auswerteeinheit des Distanzmessers so ausgelegt ist, dass die Distanz zum Zielobjekt - je nach durch das zurückkommende Lichtsignal bewirkter Ansteuerung des Detektors in seinem mittleren und oberen Amplitudenbereich oder in seinem unteren, linearen Amplitudenbereich - anhand der im ersten Kanal erzeugten digitalen Daten oder anhand der digitalen WFD-Daten bestimmbar ist.

8. Distanzmesser nach einem der Ansprüche 4 bis 7,
**dadurch gekennzeichnet, dass**
der Detektor (61) als Empfangs-Photodiode, insbesondere APD oder PIN-Diode, ausgebildet ist, im Speziellen mit nachgeschalteter Verstärker-Stufe, insbesondere mit rauscharmem Transimpedanzverstärker-Glied TIA.

9. Distanzmesser nach einem der Ansprüche 4 bis 8,
**dadurch gekennzeichnet, dass**
ein FPGA (17) und/oder ein Mikroprozessor und/oder ein DSP vorgesehen sind und diese - ggf. zusammen - die Auswerteeinheit darstellen.

10. Distanzmesser nach einem der Ansprüche 4 bis 9,
**dadurch gekennzeichnet, dass**
der Komparator-Stufe (12) der Zeitmessschaltung (10) ein elektronisch verstellbares Dämpfungsglied VGA direkt vorgeschaltet ist, insbesondere wobei die Dämpfung dynamisch durch die Auswerteeinheit, ggf. das FPGA, anpassbar ist.

11. Distanzmesser nach einem der Ansprüche 4 bis 10,
**dadurch gekennzeichnet, dass**
der Distanzmesser und die Auswerteeinheit des Distanzmessers zum fortlaufenden und in Echtzeit erfolgenden Bestimmen von Distanzen ausgebildet ist, insbesondere wobei die Auswerteeinheit ausgebildet ist zur Ausgabe der Distanz, insbesondere zusammen mit einer abgeleiteten Amplitude für das zurückkommende Lichtsignal und einer abgeleiteten Qualitätsangabe über die Distanzbestimmung, mit einer Rate im Bereich von 0.1 bis 100 MHz.

12. Zeitmessmethode für ein eingehendes Signal, insbesondere zur Anwendung im Rahmen eines Entfernungsmessens und dabei zum Messen eines Zeitpunkts für einen Retour kommenden Lichtpuls, mit
• einem fortlaufenden Prüfen eines Erfüllens eines definierten Kriteriums durch das eingehende Signal und einem Ausgeben eines Triggersignals bei Erfüllen des Kriteriums, insbesondere wobei als das Kriterium ein Über- oder Unterschreiten eines Schwellwerts definiert ist,
• einem Erzeugen und Ausgeben eines künstlichen Form-Signals zeitlich fix abhängig von der Ausgabe des Triggersignals, wobei das Form-Signals auf post-Abtastungs-Interpolierbarkeit ausgelegt ist und bekannte Form und insbesondere bekannte Amplitude aufweist,
• einem mit einer definierten Abtastrate erfolgenden Abtasten des Form-Signals und Wandeln in abgetastete Werte für das Form-Signals enthaltende digitale Daten, und
• einem Ableiten eines Zeitpunkts für das eingehende Signal durch Auswertung der digitalen Daten, abhängig von einer Bestimmung einer zeitlichen Lage des Form-Signals, was unter Heranziehung von einer zeitlichen Interpolation der in den digitalen Daten enthaltenen Werte sowie der bekannten Form des Form-Signals erfolgt.

13. Zeitmessmethode nach Anspruch 12,
**dadurch gekennzeichnet, dass**
das Form-Signal pulsförmig mit definierter Pulsbreite ist und asynchron zur Abtastrate innerhalb der Pulsbreite mehrmals, insbesondere fortwährend oder kontinuierlich, seine Signalwerte ändert, insbesondere wobei das Form-Signal
• glockenförmig,
• sägezahnförmig,
• dreieckförmig,
• trapezförmig oder
• stufenförmig
ausgebildet ist.

14. Optoelektronisches Distanzmessverfahren nach dem Time-of-Flight-Prinzip, mit
• einem Aussenden wenigstens eines gepulsten Lichtsignals, insbesondere eines Laserlicht-Pulses, auf ein Zielobjekt,
• einem Detektieren des vom Zielobjekt zurückkommenden Lichtsignals, und
• einem Bestimmen einer Distanz zum Zielobjekt abhängig von einem für das zurückkommenden Lichtsignal abgeleiteten Zeitpunkt,
**dadurch gekennzeichnet, dass**
Ableiten des Zeitpunkts für das zurückkommende Lichtsignal erfolgt unter Anwendung einer Zeitmessmethode nach einem der Ansprüche 12 oder 13.

## Claims

1. Time measurement circuit (10) for an incoming signal, in particular for use as a part of a receiving circuit of a distance meter and in this case for measuring a point in time for a returning light pulse,
comprising
• a comparator stage (12) for generating a comparator output signal depending on a fulfillment of a criterion by the incoming signal, in particular wherein exceeding or falling below a threshold value is defined as the criterion,
• a digitization stage (16) for sampling, which is performed at a defined sampling rate, of an input signal fed to the digitization stage and converting it into digital data containing sampled values for the input signal, and
• an evaluation unit (17) for determining a chronological location for the incoming signal by evaluating the digital data,
**characterized in that**
• a signal generating stage (14, 15) is interconnected between the comparator stage (12) and the digitization stage (16), which is designed to generate, in a chronologically fixed manner dependent on the content of the comparator output signal, a shape signal, which is designed for post-sampling interpolation ability, of known shape and in particular known amplitude, wherein the shape signal is fed to the digitization stage as the input signal, and
• the evaluation unit (17) is designed to determine a time for the incoming signal while using a chronological interpolation of the values contained in the digital data and the known shape of the shape signal.

2. Time measurement circuit according to Claim 1,
**characterized in that**
the signal generating stage (14, 15) is designed such that the shape signal is pulsed with defined pulse width and changes its signal values asynchronously to the sampling rate of the digitization stage multiple times within the pulse width, in particular progressively or continuously,
in particular wherein the shape signal is formed as
• bell-shaped,
• sawtoothed,
• triangular,
• trapezoidal, or
• stepped.

3. Time measurement circuit according to Claim 1,
**characterized in that**
the signal generating stage comprises at least one flip-flop circuit (14), in particular a D flip-flop, and a low-pass filter (15).

4. Optoelectronic distance meter according to the time-of-flight principle, comprising
• at least one light source for emitting at least one pulsed light signal, in particular a laser light pulse, onto a target object,
• a receiving circuit having a detector for detecting the light signal returning from the target object and signal processing electronics downstream from the detector, and
• an evaluation unit for determining a distance to the target object,
**characterized in that**
a time measurement circuit (10) according to any one of Claims 1 to 3 is provided as part of the signal processing electronics and the evaluation unit.

5. Distance meter according to Claim 4,
**characterized in that**
• the comparator stage of the time measurement circuit is designed and provided with criteria such that a comparator output signal is generated and output in each case for a rising flank and for a falling flank of the returning detected light signal,
• the evaluation unit of the time measurement circuit is designed for determining a first time, that for the rising flank, and a second time, that for the falling flank, and
• the evaluation unit of the distance meter is designed for deriving a distance to the target object depending on the determined first time and the determined second time.

6. Distance meter according to Claim 4 or 5,
**characterized in that**
• the comparator stage of the time measurement circuit is designed and provided with criteria such that a comparator output signal is generated and output in each case for a rising flank of the returning detected light signal depending on at least one first and one second set trigger threshold,
• the evaluation unit of the time measurement circuit is designed for determining a first time, that for exceeding the first trigger threshold, and a second time, that for exceeding the second trigger threshold, and
• the evaluation unit of the distance meter is designed for deriving a distance to the target object depending on the determined first time and the determined second time, in particular wherein a quality specification about the distance determination is furthermore also derivable depending on the determined first time and the determined second time.

7. Distance meter according to any one of Claims 4 to 6,
**characterized in that**
the signal processing electronics have a first and a second channel, wherein
• the time measurement circuit is provided in the first channel and it is therefore provided for the case of an activation of the detector, which is caused by the returning light signal, in its middle and upper amplitude range, and
• the second channel (18) is provided for the case of an activation of the detector, which is caused by the returning light signal, in its lower, in particular linear amplitude range and for this purpose has
□ a digitization stage for sampling, which is performed at a defined sampling rate, of the detected light signal and converting it into digital WFD data containing sampled values and
□ an evaluation unit for determining a chronological location of the detected light signal in consideration of a pulse shape, which is depicted on the basis of the sampled values, for the detected light signal,
and
the evaluation unit of the distance meter is designed so that the distance to the target object - depending on the activation of the detector, which is caused by the returning light signal, in its middle and upper amplitude range or in its lower, linear amplitude range - is determinable on the basis of the digital data generated in the first channel or on the basis of the digital WFD data.

8. Distance meter according to any one of Claims 4 to 7,
**characterized in that**
the detector (61) is designed as a receiver photodiode, in particular an APD or pin diode, especially having downstream amplifier stage, in particular having low-noise trans-impedance amplifier element TIA.

9. Distance meter according to any one of Claims 4 to 8,
**characterized in that**
an FPGA (17) and/or a microprocessor and/or a DSP are provided and these - optionally together - represent the evaluation unit.

10. Distance meter according to any one of Claims 4 to 9,
**characterized in that**
an electronically adjustable damping element VGA is directly upstream of the comparator stage (12) of the time measurement circuit (10), in particular wherein the damping is dynamically adaptable by the evaluation unit, optionally the FPGA.

11. Distance meter according to any one of Claims 4 to 10,
**characterized in that**
the distance meter and the evaluation unit of the distance meter are designed for progressive determination, which is performed in real time, of distances, in particular wherein the evaluation unit is designed to output the distance, in particular together with a derived amplitude for the returning light signal and a derived quality specification about the distance determination, at a rate in the range of 0.1 to 100 MHz.

12. Time measurement method for an incoming signal, in particular for use in the scope of a distance measurement and in this case for measuring a point in time for a returning light pulse, comprising
• progressive checking of a fulfillment of a defined criterion by the incoming signal and outputting a trigger signal upon fulfilling the criterion, in particular wherein exceeding or falling below a threshold value is defined as the criterion,
• generating and outputting an artificial shape signal in a chronologically fixed manner depending on the output of the trigger signal, wherein the shape signal is designed for post-sampling interpolation ability and has known shape and in particular known amplitude,
• sampling, which is performed at a defined sampling rate, of the shape signal and converting it into digital data containing sampled values for the shape signal, and
• deriving a point in time for the incoming signal by evaluation of the digital data, depending on a determination of a chronological location of the shape signal, which is performed using a chronological interpolation of the values contained in the digital data and the known shape of the shape signal.

13. Time measurement method according to Claim 12,
**characterized in that**
the shape signal is pulsed having defined pulse width and changes its signal values asynchronously to the sampling rate multiple times within the pulse width, in particular progressively or continuously, in particular wherein the shape signal is formed as
• bell-shaped,
• sawtoothed,
• triangular,
• trapezoidal, or
• stepped.

14. Optoelectronic distance measurement method according to the time-of-flight principle, comprising
• emitting at least one pulsed light signal, in particular a laser light pulse, toward a target object,
• detecting the light signal returning from the target object, and
• determining a distance to the target object depending on a point in time derived for the returning light signal,
**characterized in that**
deriving the point in time for the returning light signal is performed using a time measurement method according to one of Claims 12 or 13.

## Revendications

1. Circuit de cadencement (10) pour un signal entrant, en particulier pour l'utilisation en tant que partie d'un circuit de réception d'un dispositif de mesure de distance et, ce faisant, pour la mesure d'un instant pour une impulsion lumineuse de retour, avec
• un étage comparateur (12) pour produire un signal de sortie de comparateur en fonction de la réalisation d'un critère par le signal entrant, en particulier cependant qu'un dépassement vers le haut ou vers le bas d'une valeur seuil est défini comme critère,
• un étage de numérisation (16) pour le balayage, qui se fait avec une fréquence d'échantillonnage définie, d'un signal d'entrée amené à l'étage de numérisation et pour la transformation en valeurs échantillonnées pour des données numériques qui contiennent le signal d'entrée et
• une unité d'évaluation (17) pour déterminer une position temporelle pour le signal entrant par évaluation des données numériques,
**caractérisé en ce**
• **qu'**un étage de production de signal (14, 15) est interconnecté entre l'étage comparateur (12) et l'étage de numérisation (16), étage de production de signal qui est conçu pour générer, de manière temporellement fixe en fonction de la réception du signal de sortie du comparateur, un signal de forme, de forme connue et en particulier d'amplitude connue, conçu pour la capacité d'interpolation post-échantillonnage, cependant que le signal de forme est amené en tant que signal d'entrée à l'étage de numérisation (16) et que
• l'unité d'évaluation (17) est conçue pour déterminer un moment pour le signal entrant en ayant recours à une interpolation temporelle des valeurs contenues dans les données numériques ainsi que de la forme connue du signal de forme.

2. Circuit de cadencement selon la revendication 1, **caractérisé en ce que** l'étage de production de signal (14, 15) est conçu de telle manière que le signal de forme est en forme d'impulsion avec une largeur d'impulsion définie et modifie ses valeurs de signal plusieurs fois, en particulier de manière continuelle ou continue, à l'intérieur de la largeur d'impulsion de manière asynchrone par rapport à la fréquence d'échantillonnage de l'étage de numérisation, en particulier cependant que le signal de forme est configuré
• en forme de cloche,
• en forme de dent de scie,
• en forme de triangle,
• en forme de trapèze ou
• de forme étagée.

3. Circuit de cadencement selon la revendication 1, **caractérisé en ce que** l'étage de production de signal comprend au moins un circuit de bascule (14), en particulier un circuit de bascule D et un filtre passe-bas (15).

4. Dispositif de mesure de distance optoélectronique selon le principe du temps de vol avec
• au moins une source de lumière pour émettre au moins un signal de lumière puisée, en particulier une impulsion de lumière laser, sur un objet cible,
• un circuit de réception avec un détecteur pour détecter le signal lumineux de retour de l'objet cible et un dispositif électronique de traitement de signal placé en aval du détecteur et
• une unité d'évaluation pour déterminer une distance avec l'objet cible,
**caractérisé en ce qu'**il est prévu un circuit de cadencement (10) selon l'une des revendications 1 à 3 comme parties du dispositif électronique de traitement de signal et de l'unité d'évaluation.

5. Dispositif de mesure de distance selon la revendication 4, **caractérisé en ce**
• **que** l'étage comparateur du circuit de cadencement est conçu et est pourvu de critères de manière qu'un signal de sortie du comparateur est respectivement produit et émis pour un flanc ascendant et pour un flanc descendant du signal lumineux de retour détecté,
• **que** l'unité d'évaluation du circuit de cadencement est conçue pour la détermination d'un premier temps, celui d'un flanc ascendant, et d'un second temps, celui d'un flanc descendant et
• **que** l'unité d'évaluation du dispositif de mesure de distance est configurée pour dériver une distance par rapport à l'objet cible en fonction du premier temps déterminé et du second temps déterminé.

6. Dispositif de mesure de distance selon la revendication 4 ou 5, **caractérisé en ce**
• **que** l'étage comparateur du circuit de cadencement est conçu et est pourvu de critères de manière qu'un signal de sortie du comparateur est respectivement produit et émis pour un flanc ascendant du signal lumineux de retour détecté, en fonction d'au moins un premier seuil de déclenchement, et d'un second seuil de déclenchement fixé,
• **que** l'unité d'évaluation du circuit de cadencement est conçue pour la détermination d'un premier temps, celui du dépassement par le haut du premier seuil de déclenchement et d'un second temps, celui du dépassement par le haut du second seuil de déclenchement, et
• **que** l'unité d'évaluation du dispositif de mesure de distance est configurée pour dériver une distance par rapport à l'objet cible en fonction du premier temps déterminé et du second temps déterminé, en particulier cependant qu'une indication de qualité sur la détermination de la distance peut également être de plus dérivée en fonction du premier temps déterminé et du second temps déterminé.

7. Dispositif de mesure de distance selon l'une des revendications 4 à 6, **caractérisé en ce que** le dispositif électronique de traitement de signal présente un premier et un second canal, cependant que
• le circuit de cadencement est prévu dans le premier canal et celui-ci l'est donc pour le cas d'une commande du détecteur provoquée par le signal lumineux de retour dans sa plage d'amplitude moyenne et supérieure et
• le second canal (18) est prévu pour le cas d'une commande du détecteur provoquée par le signal lumineux de retour dans sa plage d'amplitude inférieure, en particulier linéaire, et présente pour ce faire
▪ un étage de numérisation pour le balayage du signal lumineux détecté qui se fait avec une fréquence d'échantillonnage définie et la transformation en données numériques WFD qui contiennent des valeurs échantillonnées et
▪ une unité d'évaluation pour déterminer une position temporelle du signal lumineux détecté en tenant compte d'une forme d'impulsion pour le signal lumineux détecté reproduite à l'aide des valeurs échantillonnées et que
l'unité d'évaluation du dispositif de mesure de distance est conçue de telle manière que la distance par rapport à l'objet cible peut être déterminée à l'aide des données numériques produites dans le premier canal ou à l'aide des données numériques WFD - respectivement selon la commande du détecteur provoquée par le signal lumineux de retour dans sa plage d'amplitude moyenne et supérieure ou dans sa plage d'amplitude inférieure linéaire.

8. Dispositif de mesure de distance selon l'une des revendications 4 à 7, **caractérisé en ce que** le détecteur (61) est configuré comme photodiode de réception, en particulier comme diode APD ou PIN, en particulier avec un étage amplificateur placé en aval, en particulier avec un amplificateur de transimpédance TIA silencieux.

9. Dispositif de mesure de distance selon l'une des revendications 4 à 8, **caractérisé en ce qu'**il est prévu un FPGA (17) et/ou un microprocesseur et/ou un DSP et que ceux-ci représentent - le cas échéant ensemble - l'unité d'évaluation.

10. Dispositif de mesure de distance selon l'une des revendications 4 à 9, **caractérisé en ce qu'**un atténuateur VGA réglable électroniquement est placé directement en amont de l'étage comparateur (12) du circuit de cadencement (10), en particulier cependant que l'atténuation peut être adaptée de manière dynamique par l'unité d'évaluation, le cas échéant par le FPGA.

11. Dispositif de mesure de distance selon l'une des revendications 4 à 10, **caractérisé en ce que** le dispositif de mesure de distance et l'unité d'évaluation du dispositif de mesure de distance sont configurés pour la détermination continue et qui se fait en temps réel de distances, en particulier cependant que l'unité d'évaluation est configurée pour sortir la distance, en particulier avec une amplitude dérivée pour le signal lumineux de retour et d'une indication de qualité dérivée, par la détermination de la distance avec une fréquence de l'ordre de 0,1 à 100 MHz.

12. Méthode de mesure du temps pour un signal entrant, en particulier pour l'application dans le cadre d'une mesure de distance et ce faisant pour la mesure d'un temps pour une impulsion lumineuse de retour, avec
• vérification en continu par le signal entrant de la réalisation d'un critère défini et émission d'un signal de déclenchement lorsque le critère est réalisé, en particulier cependant qu'un dépassement par le haut ou par le bas d'une valeur seuil est défini,
• production et émission d'un signal de forme artificiel de manière temporellement fixe en fonction de l'émission du signal de déclenchement, cependant que le signal de forme est conçu pour la capacité d'interpolation post-échantillonnage et présente une forme connue et en particulier une amplitude connue,
• échantillonnage du signal de forme qui se fait avec une fréquence d'échantillonnage définie et transformation en données numériques qui contiennent des valeurs échantillonnées pour le signal de forme et
• dérivation d'un instant pour le signal entrant par évaluation des données numériques, en fonction d'une détermination d'une position temporelle du signal de forme, ce qui se fait en ayant recours à une interpolation temporelle des valeurs contenues dans les données numériques ainsi qu'à la forme connue du signal de forme.

13. Méthode de mesure du temps selon la revendication 12, **caractérisée en ce que** le signal de forme est en forme d'impulsion avec une largeur d'impulsion définie et modifie ses valeurs de signal plusieurs fois, en particulier de manière continuelle ou continue, à l'intérieur de la largeur d'impulsion de manière asynchrone par rapport à la fréquence d'échantillonnage, en particulier cependant que le signal de forme est configuré
• en forme de cloche,
• en forme de dent de scie,
• en forme de triangle,
• en forme de trapèze ou
• de forme étagée.

14. Procédé de mesure de distance optoélectronique selon le principe du temps de vol avec
• émission d'au moins un signal de lumière puisée, en particulier une impulsion de lumière laser, sur un objet cible,
• détection du signal lumineux de retour de l'objet cible et
• détermination d'une distance avec l'objet cible en fonction d'un instant dérivé pour le signal lumineux de retour
**caractérisé en ce que** la dérivation de l'instant pour le signal lumineux de retour se fait en appliquant une méthode de mesure du temps selon l'une des revendications 12 ou 13.
